# EUROPÄISCHE PATENTSCHRIFT

(11) **EP 0 522 210 B1**
(45) Veröffentlichungstag und Bekanntmachung des Hinweises auf die Patenterteilung: **27.09.1995**
(21) Anmeldenummer: 91250189.7
(22) Anmeldetag: 12.07.1991
(51) Int. Cl.: H02K 9/18

(54) **Verfahren zum Kühlen einer umlaufenden elektrischen Maschine und elektrische Maschine zur Durchführung des Verfahrens**
Cooling system of a rotating electrical machine and electrical machine for carrying out such a system
Système de refroidissement pour une machine électrique à rotation et machine électrique pour réaliser un tel système

(43) Veröffentlichungstag der Anmeldung: 13.01.1993
(73) Patentinhaber: SIEMENS AKTIENGESELLSCHAFT, 80333 München (DE)
(72) Erfinder: Zwarg, Günter, Dipl.-Ing., 1000 Berlin 19 (DE)

(56) Entgegenhaltungen:
- CH-A- 203 227
- DE-A- 1 281 017
- DE-B- 1 039 617
- DE-C- 616 524
- US-A- 4 682 064
- Prospekt der Siemens AG, Bestell-Nr. E212/1274

## Beschreibung

Die Erfindung liegt auf dem Gebiet der dynamoelektrischen Maschinen und ist bei der Ausgestaltung eines Kühlsystems für solche Maschinen anzuwenden, deren Läufer und Ständer mit Schlitzen zum Hindurchströmen eines gasförmigen Kühlmittels versehen sind, wobei die Strömung des Kühlmittels mit Hilfe eines einseitig angeordneten Lüfters erzeugt wird.

Bei Drehstrommotoren und -Generatoren im Leistungsbereich bis etwa 10 MW ist es üblich, Läufer und Ständer der Maschine zu kühlen, indem ein gasförmiges Kühlmittel - in der Regel Luft - durch radiale Schlitze im Läufer und Ständer strömt. Die Strömung des Kühlmittels wird dabei teilweise durch die Schlitze des Läufers, im wesentlichen aber durch einen Lüfter, insbesondere einen Radiallüfter, bewirkt, der einseitig auf der Welle der Maschine oder getrennt davon angeordnet ist und in aller Regel die Kühlluft durch die Maschine saugt (Siemens-Katalog M 27/1990 "Drehstrom-Hochspannungsmotoren", insbesondere Seite 19 ; Siemens-Katalog E 212/1274 "Langsam laufende Siemens-Hochspannungsmotoren großer Leistung", DE-A-12 81 017).

Ausgehend von einem Verfahren mit den Merkmalen des Oberbegriffes des Patentanspruches 1, das zur Anwendung bei elektrischen Maschinen mit den Merkmalen der Oberbegriffe der Patentansprüche 2 und 4 vorgesehen ist, liegt der Erfindung die Aufgabe zugrunde, die Kühlung der umlaufenden elektrischen Maschine zu verbessern, ohne den vom Lüfter geförderten Kühlmittelstrom zu erhöhen.

Zur Lösung dieser Aufgabe ist bezüglich des Verfahrens vorgesehen, daß die vom Lüfter erzeugte Luftströmung von einer innerhalb der Maschine im Kreislauf geführten Teilströmung überlagert wird, wobei diese Teilströmung nicht vom Lüfter gefördert und nach ihrer Abzweigung aus der Hauptströmung und nach Umströmen oder Durchströmen von Teilen des Läufers und des Ständers der vom Lüfter erzeugten Luftströmung an einer strömungsaufwärts gelegenen Stelle wieder zugeführt wird.

Bei einer derartigen Ausgestaltung der Kühlmittelströmung wird also zusätzlich zu der Hauptströmung des Kühlmittels eine sekundäre Wirbelkühlströmung erzeugt, die sich ständig mit der primären Hauptkühlmittelströmung austauscht bzw. erneuert. Auf diese Weise wird die innere, zur Kühlung der elektrischen Maschine wirksame Kühlmittelströmung vergrößert. Durch die vergrößerte interne Kühlmittelströmung wird der Wärmeübergang und damit die Kühlung der Maschine verbessert.

Bei schnellaufenden elektrischen Maschinen mit relativ langen Blechpaketen läßt sich auf diese Weise eine wirksame Kühlmittelströmung auch in den Schlitzen des abluftseitigen Bereiches von Läufer und Ständer erreichen. Hierzu geht man zweckmäßig derart vor, daß sich die Führungskanäle, die zwischen der den Läufer tragenden Welle und dem Läuferblechpaket für die Luftströmung vorgesehen sind, nur über einen Teil der Länge des Läuferblechpaketes erstrecken, wobei dieser Teil mindestens 45 % der Gesamtlänge des Läuferblechpaketes beträgt, und daß zwischen Welle und Läuferblechpaket weitere schlitzartige Führungskanäle angeordnet sind, deren Eintrittsöffnungen am abluftseitigen Ende des Läuferblechpaketes angeordnet sind und sich über die restliche Länge des Läuferblechpaketes erstrecken. Bei einer derartigen Ausgestaltung durchströmt die Kühlluft zunächst von innen nach außen einen ersten Bereich des Läufers und des Ständers und umströmt dann die Ständerwickelköpfe auf der Abluftseite der Maschine. Diesem die Ständerwickelköpfe umströmenden Abschnitt der primären Kühlmittelströmung wird nun eine sekundäre Kühlmittelströmung überlagert, die durch die im abluftseitigen Bereich des Läuferblechpaketes angeordneten Radialschlitze erzeugt wird. Diese sekundäre Kühlmittelströmung wird durch die weiteren schlitzartigen Führungskanäle den übrigen Läufer- und Ständerschlitzen zugeführt und dann wieder in die primäre Kühlmittelströmung eingespeist, die bereits den ersten Teilbereich der Läufer- und Ständerschlitze durchströmt hat. Auf diese Weise wird die Verteilung des Kühlmittels und damit auch die Erwärmung der Maschine über die Maschinenlänge vergleichmäßigt. Die damit verbundene stärkere Erwärmung des durch die Maschine strömenden Kühlmittelstromes ist dabei kein Nachteil, weil dies bei der Auslegung des externen Kühlers, dem die primäre Kühlmittelströmung nach Durchströmen der Abluftöffnung zugeführt wird, entsprechend berücksichtigt werden kann. - Die Größe der in der elektrischen Maschine erzeugten Wirbelkühlmittelströmung wird durch die Länge der schlitzartigen Führungskanäle bestimmt, wobei die zuluftseitigen Führungskanäle und die abluftseitigen Führungskanäle durch eine radial zur Maschinenwelle verlaufende Trennwand gegeneinander abgeschottet sind. Eine optimale Wirkung der sekundären Kühlmittelströmung erhält man, wenn diese Trennwand so angeordnet ist, daß etwa 60 bis 70 % der radialen Schlitze in Läufer und Ständer von der primären zuluftseitig in die Führungskanäle zwischen Welle und Läufer einströmenden Kühlmittelströmung durchströmt werden.

Bei sehr langsam laufenden elektrischen Maschinen, bei denen das Läuferblechpaket mittels einer Nabe auf der Welle angeordnet ist, kann man die axial über das Läuferblechpaket herausragenden Rippen der Läufernabe oder auch einen in diesen Bereich angeordneten Radiallüfter dazu benutzen, eine Wirbelkühlströmung zu erzeugen, welche die zuluftseitigen Ständerwickelköpfe kühlt. Hierzu ist es erforderlich, daß der Raum, der den zuluftseitigen Ständerwickelkopf umgibt, mit dem Raum, der die Kühlluft von der Zuluftöffnung zur Nabe führt, frei kommunizierend verbunden ist und daß der Raum, der den Ständer radial umgibt, gegen den Raum, der den zuluftseitigen Ständerwickelkopf umgibt, abgeschottet ist. Hierbei entfällt also auf der Zuluftseite der Maschine der sonst übliche Wicklungsschild.

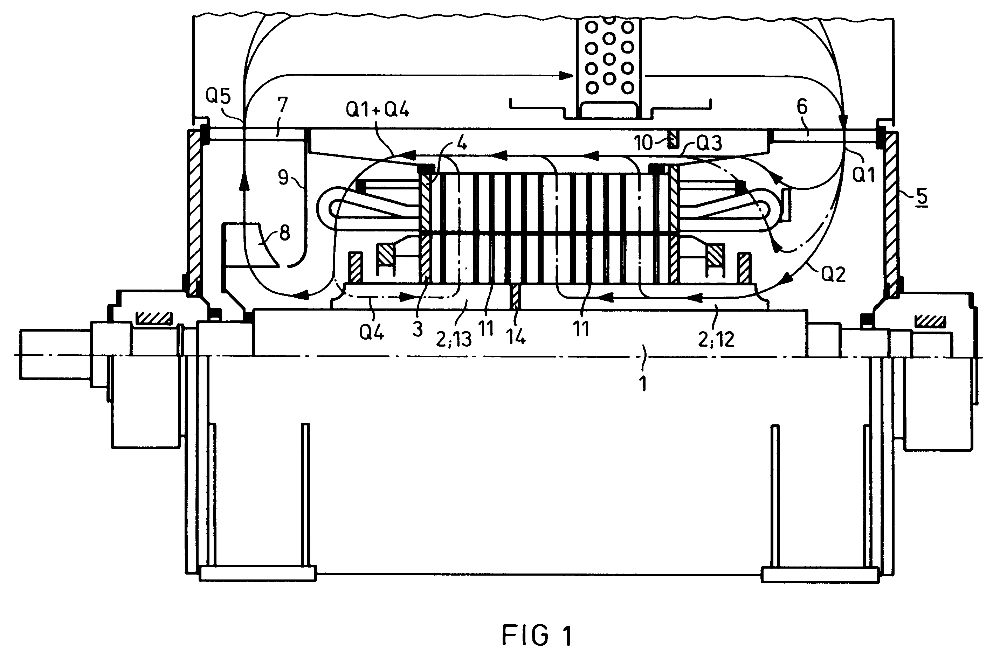

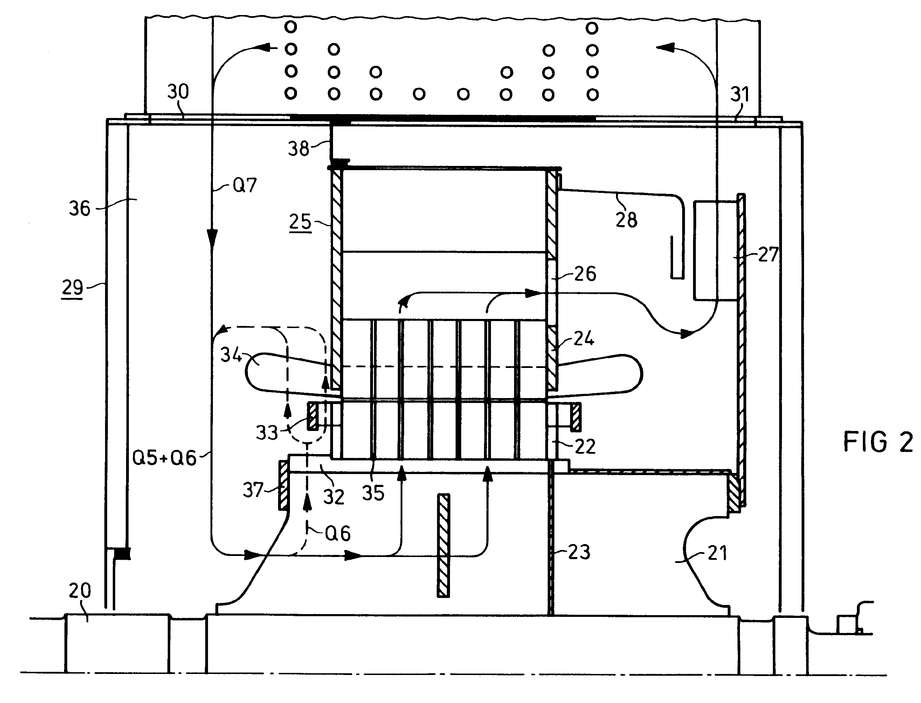

Zwei Ausführungsbeispiele für eine elektrische Maschine zur Durchführung des neuen Verfahrens sind in den Figuren 1 und 2 dargestellt. Dabei zeigt
Figur 1 einen Asynchronmotor mit Käfigläufer und
Figur 2 einen langsam laufenden Asynchron-Käfigläufermotor.

Der ausschnittsweise schematisch dargestellte Asynchronmotor mit Käfigläufer gemäß Fig. 1 trägt auf der Welle 1 mit Hilfe der Nabe 2 den Läufer 3, der seinerseits vom Ständer 4 umgeben ist. Der Motor als Ganzes ist in einem Gehäuse 5 angeordnet, das mit einer Zuluftöffnung 6 und einer Abluftöffnung 7 versehen ist. Im Bereich der Abluftöffnung 7 befindet sich der Radiallüfter 8, dem ein Strömungsleitblech 9 zugeordnet ist. Am zuluftseitigen Ende des Ständers 4 ist eine Sperrwand 10 angeordnet, wobei zwischen der Sperrwand und dem Ständer ein Schlitz zum Hindurchtreten von Kühlluft vorgesehen ist.

Läufer 3 und Ständer 4 sind mit Radialschlitzen 11 zum Hindurchtreten von Kühlluft versehen. Zum gleichen Zweck ist die Welle 2 mit Axialschlitzen 12 sowie Axialschlitzen 13 versehen, wodurch Führungskanäle für ein gasförmiges Kühlmittel gebildet werden, deren Eintrittsöffnungen jeweils am Ende der Nabe liegen. Die Führungskanäle 12 und 13 sind durch eine Sperrwand 14 gegeneinander abgeschottet.

Beim Betrieb der Maschine wird durch die Saugwirkung des Radiallüfters 8 Kühlluft über die Zuluftöffnung 6 angesaugt, so daß sich im Bereich der Zuluftöffnung 6 eine Kühlmittelströmung Q1 ergibt. Diese teilt sich in eine Teilströmung Q2 auf, die über die Nabe 2 in die entsprechenden Radialschlitze 11 einströmt. Eine zweite Teilströmung Q3 umströmt die zuluftseitigen Ständerwickelköpfe und tritt durch den Schlitz zwischen der Sperrwand 10 und dem Ständer 4 in den den Ständer umgebenden Raum ein und vereinigt sich dort mit der Teilströmung Q2. Die Kühlmittelströmung Q1 strömt dann anschließend um die abluftseitigen Ständerwickelköpfe und verläßt als erwärmte Kühlluftmenge Q5 das Gehäuse.

Infolge der Sperrwand 14 kann sich im abluftseitigen Bereich der Maschine durch die Lüfterwirkung des Läufers 3 eine Wirbelströmung Q4 ausbilden, die sich der primären Kühlmittelströmung Q1 in der Weise überlagert, daß sie sich beim Austritt aus dem Ständer 4 mit der Kühlmittelströmung 1 vermischt und im Bereich der abluftseitigen Eintrittsöffnungen der Zuführungskanäle 13 von der Hauptkühlmittelströmung Q1 wieder abzweigt. Die von der überlagerten Wirbelströmung Q4 beim Durchströmen des Ständers und des Läufers aufgenommene Wärme wird bei der Vermischung mit dem Hauptkühlmittelstrom Q1 an diesen abgegeben.

Bei dem Ausführungsbeispiel gemäß Fig. 2 ist die Welle 20 mit einer radial weit ausladenden Nabe 21 versehen, auf der das Läuferblechpaket 22 aufsitzt. Innerhalb der Nabe 21 ist eine Sperrwand 23 angeordnet. Der Ständer 24 ist von einem Gehäuse 25 umgeben, das sich im wesentlichen in radialer Richtung erstreckt und mit einer Durchtrittsöffnung 26 versehen ist. Zwischen dem an der Nabe 21 befestigten Radiallüfter 27 und dem Gehäuse 25 ist das Leitblech 28 angeordnet. Das Maschinengehäuse 29 ist mit einer Zuluftöffnung 30 und einer Abluftöffnung 31 versehen, wobei der Zuluftbereich 36 des Maschinengehäuses gegen den Abluftbereich mittels der Sperrwand 38 abgeschottet ist.

Aufgrund dieser Konstruktion der Maschine ergibt sich durch den Radiallüfter 27 eine Kühlluftströmung Q7, die von der Zuluftöffnung 30 zur Nabe 21 strömt und von dort aus die Radialschlitze 35 im Läufer 22 und im Ständer 24 durchströmt und über die Öffnung 26 und den Lüfter 27 durch die Abluftöffnung 31 hindurch abströmt.

Im zuluftseitigen Bereich der Maschine ist die Nabe 21 mit einem gewissen Überstand 32 ausgebildet, so daß die entsprechenden radial verlaufenden Nabenbleche die Funktion eines Radiallüfters wahrnehmen. Dadurch ergibt sich im Bereich der axial herausragenden Rippen 33 des Läuferblechpaketes und der axial herausragenden Ständerwickelköpfe 34 eine Wirbelströmung Q6, die sich im zuluftseitigen Teil der Hauptkühlmittelströmung Q7 dieser überlagert. Dies ist dadurch möglich, daß der Ständerwickelkopf am zuluftseitigen Ende der Maschine nicht mit einem Wicklungsschild versehen ist, wie es an sich üblich ist.

Zur besseren Ausbildung der Wirbelströmung Q6 ist die Nabe in diesem Bereich zusätzlich mit einem Leitblech 37 versehen. - Anstelle der herausragenden Rippen 32 der Läufernabe können an dieser Stelle auch die Schaufeln eines Radiallüfters angeordnet sein.

Dadurch, daß im vorliegenden Fall aus dem Hauptkühlmittelstrom Q5 kein Teilstrom für die Kühlung der zuluftseitigen Wickelköpfe abgezweigt wird, kann bei gleicher Förderleistung des Radiallüfters 27 eine größere Menge Kühlluft durch den Läufer und den Ständer strömen.

Anstelle der beschriebenen Verwendung von Luft als Kühlmittel können auch andere gasförmige Kühlmittel verwendet werden, beispielsweise Stickstoff oder Wasserstoffgas. Die weiterhin anhand des Ausführungsbeispieles gemäß Fig. 1 beschriebenen axialen Führungskanäle 12 und 13 können sich - insbesondere bei direkt auf der Welle aufsitzendem Läuferblechpaket - auch im Läuferblechpaket befinden.

## Patentansprüche

1. Verfahren zum Kühlen einer umlaufenden elektrischen Maschine, die einen radial geschlitzten Läufer (3) und einen radial geschlitzten Ständer (4) aufweist,
bei dem mittels eines einseitig angeordneten Lüfters (8) innerhalb des Maschinengehäuses eine Luftströmung erzeugt wird, die von einer Zuluftöffnung durch Schlitze des Läufers und des Ständers hindurch zu einer Abluftöffnung (7) strömt,
**dadurch gekennzeichnet,**
daß die vom Lüfter (8) erzeugte Luftströmung (Q1) von einer innerhalb der Maschine im Kreislauf geführten Teilströmung (Q4) überlagert wird, die nicht vom Lüfter gefördert wird und die nach ihrer Abzweigung aus der Hauptströmung und nach Umströmen oder Durchströmen von Teilen (11) des Läufers und des Ständers der vom Lüfter erzeugten Luftströmung (Q1) an einer strömungsaufwärts gelegenen Stelle wieder zugeführt wird.

2. Elektrische Maschine zur Durchführung des Verfahrens nach Anspruch 1, bei der zur Erzeugung der Luftströmung zwischen der den Läufer (3) tragenden Welle (1) und dem Läuferblechpaket schlitzartige Führungskanäle vorgesehen sind, deren Eintrittsöffnungen am zuluftseitigen Ende des Läufers (3) angeordnet sind,
**dadurch gekennzeichnet,**
daß sich die Führungskanäle (12) nur über einen Teil der Länge des Läuferblechpaketes (3) erstrecken, wobei dieser Teil wenigstens 45 % der Gesamtlänge des Läuferblechpaketes beträgt, und daß zwischen Welle (1) und Läuferblechpaket (3) weitere schlitzartige Führungskanäle (13) angeordnet sind, deren Eintrittsöffnungen am abluftseitigen Ende des Läuferblechpaketes angeordnet sind und sich über die restliche Länge des Läuferblechpaketes erstrecken.

3. Elektrische Maschine nach Anspruch 2, **dadurch gekennzeichnet,** daß die zuluftseitigen Führungskanäle (12) und die abluftseitigen Zuführungskanäle (13) durch eine radial zur Welle (1) verlaufende Wand (14) voneinander getrennt sind.

4. Langsamlaufende elektrische Maschine zur Durchführung des Verfahrens nach Anspruch 1, bei der das Läuferblechpaket (22) mittels einer Nabe (21) auf der Welle (20) angeordnet ist und der Außendurchmesser des Lüfters größer als der Innendurchmesser des Ständers (24) ist oder die Maschine von einem separaten Lüfter belüftet wird, und bei der am zuluftseitigen Ende des Läufers ein rotierendes Luftförderelement zur Erzeugung einer von der Hauptströmung abgezweigten Teilströmung zur Kühlung des zuluftseitigen Ständerwickelkopfes und des Läuferwickelkopfes oder anderer stirnseitiger Bauteile angeordnet ist,
**dadurch gekennzeichnet,**
daß der den zuluftseitigen Ständerwickelkopf (34) umgebende Raum mit dem die Kühlluft von der Zuluftöffnung zur Nabe führenden Raum (36) frei kommunizierend verbunden ist und daß der Raum, der den Ständer (24) radial umgibt, gegen den Raum, der den zuluftseitigen Ständerwickelkopf umgibt, abgeschottet ist.

## Claims

1. A method for cooling a rotating electrical machine which comprises a radially slotted rotor (3) and a radially slotted stator (4), in which an air flow is generated within the machine housing by means of a fan (8) arranged on one side, the said air flow flowing from a supply opening through slots in the rotor and in the stator to an exhaust air opening (7), characterised in that a partial flow (Q4) is superimposed over the air flow (Q1) generated by the fan (8), which partial flow (Q4) is conveyed in a circuit within the machine, is not conveyed by the fan and after branching off from the main flow and flowing around or through parts (11) of the rotor and stator is again supplied to the air flow (Q1) generated by the fan at a point lying upstream.

2. An electrical machine for carrying out the method according to claim 1, in which slot-like guide ducts for generating the air flow are provided between the shaft (1) supporting the rotor (3) and the rotor plate set, the inlet ports of said guide ducts being arranged on the supply air-side end of the rotor (3), characterised in that the guide ducts (12) extend over only part of the length of the rotor plate set (3), this part measuring at least 45% of the overall length of the rotor plate set, and further slot-like guide ducts (13) are arranged between the shaft (1) and rotor plate set (3), whose inlet ports are arranged on the exhaust air-side end of the rotor plate set and extend over the remaining length of the rotor plate set.

3. An electrical machine according to claim 2, characterised in that the supply air-side guide ducts (12) and the exhaust air-side supply ducts (13) are separated from one another by a wall (14) extending radially to the shaft (1).

4. A slow-running electrical machine for carrying out the method according to claim 1, in which the rotor plate set (22) is arranged by means of a hub (21) on the shaft (20), and the external diameter of the fan (sic) is greater than the internal diameter of the stator (24) or the machine is ventilated by a separated fan, and in which a rotating air conveying element is arranged at the supply air-side end of the rotor for generating a partial flow branched off from the main flow for cooling the supply air-side stator winding head and rotor winding head or other components arranged at the end face, characterised in that the space surrounding the supply air-side stator winding head (34) is connected so as to freely communicate with the space (36) conveying the cooling air from the supply opening to the hub, and the space radially surrounding the stator (24) is partitioned relative to the space surrounding the supply air-side stator winding head.

## Revendications

1. Procédé pour refroidir une machine électrique tournante, qui possède un rotor (3) fendu radialement et un stator (4) fendu radialement,
selon lequel un ventilateur (8) monté d'un côté produit, à l'intérieur de la carcasse de la machine, un courant d'air qui circule depuis une ouverture d'arrivée de l'air jusqu'à une ouverture d'évacuation d'air (7), en traversant des fentes du rotor et du stator,
caractérisé par le fait qu'au courant d'air (Q1) produit par le ventilateur (8) est superposé un courant partiel (Q4), qui circule selon un circuit fermé à l'intérieur de la machine et n'est pas entraîné par le ventilateur et qui, après sa dérivation à partir du courant principal et après avoir contourné ou traversé des parties (11) du rotor et du stator, est renvoyé au courant d'air (Q1) produit par le ventilateur, en un emplacement situé en amont.

2. Machine électrique pour la mise en oeuvre du procédé suivant la revendication 1, dans laquelle, pour la production du courant d'air entre l'arbre (1), qui porte le rotor (3), et le paquet de tôles rotoriques sont prévus des canaux de guidage en forme de fentes, dont les ouvertures d'entrée sont disposées sur l'extrémité, située du côté d'alimentation en air, du rotor (3),
caractérisée par le fait que les canaux de guidage s'étendent seulement sur une partie de la longueur du paquet de tôles rotoriques (3), cette partie étant égale au moins à 40 % de la longueur totale du paquet de tôles rotoriques, et qu'entre l'arbre (1) et le paquet de tôles rotoriques (3) sont disposés d'autres canaux de guidage en forme de fentes (13), dont les ouvertures d'entrée sont disposées sur l'extrémité, située sur le côté d'évacuation de l'air, du paquet de tôles rotoriques et s'étendent sur la longueur restante du paquet de tôles rotoriques.

3. Machine électrique suivant la revendication 2,
caractérisée par le fait que les canaux de guidage (12) situés du côté d'arrivée de l'air et les canaux d'amenée (13), situés du côté d'évacuation de l'air sont séparés les uns des autres par une paroi (14) qui s'étend radialement par rapport à l'arbre (1).

4. Machine électrique tournant lentement pour la mise en oeuvre du procédé suivant la revendication 1, dans laquelle le paquet de tôles rotoriques (22) est disposé à l'aide d'un moyeu (21) sur l'arbre (20) et le diamètre extérieur du ventilateur est supérieur au diamètre intérieur du stator (24), ou bien la machine est constituée par un ventilateur séparé, et dans laquelle sur l'extrémité du rotor, situé côté d'arrivée de l'air, est disposé un élément rotatif d'entraînement de l'air qui sert à produire un courant partiel, dérivé du courant principal, pour le refroidissement de la tête de bobinage, située du côté d'alimentation en air, du stator et de la tête de bobinage du rotor ou d'autres composants frontaux,
caractérisée par le fait
que l'espace qui entoure la tête de bobinage (34) du stator, située du côté d'arrivée de l'air, est reliée, selon une communication libre, avec l'espace (36), qui envoie l'air de refroidissement de l'ouverture d'arrivée de l'air jusqu'au moyeu, et
que l'espace, qui entoure radialement le stator (24), est fermé par rapport à l'espace, qui entoure la tête de bobinage du stator, située sur le côté d'arrivée de l'air.
